# EUROPEAN PATENT APPLICATION

(11) **EP 1 237 112 A1**
(43) Date of publication of application: **04.09.2002**
(21) Application number: 99939899.3
(22) Date of filing: 23.08.1999
(51) Int. Cl.: G06F 17/60, G07F 7/08, G07G 1/12

(54) **A METHOD FOR THE ACCOMPLISHMENT SECURE TRANSACTION FOR ELECTRONICBANKBOOK (PURSE)**

(71) Applicant: Li, Dongsheng, 100085 Beijing (CN)
(72) Inventor: Li, Dongsheng, 100085 Beijing (CN)
(74) Representative: Pykälä, Timo Tapani
(86) International application number: PCT/CN99/00124
(87) International publication number: WO 01/015024

(57) **Abstract**

The invention discloses a method implementing secure transaction for electronic deposit, it is characterized that: a grey lock mark is merged into a electronic deposit and becomes one of electronic deposit attribute parameters; when locking a IC card i.e. setting a grey lock mark on a IC card, locking card source is recorded on the IC card at the same time; when debiting, judging the locking card source and combing debiting operation with unlocking operation into one step operation, i. e. after debiting successfully, unlocking is automatically done. It solves illegal unlocking problem effectively and thoroughly, so electronic deposit consumption transaction is more secure and convenience.

## Description

### Field of the Technology

The present invention relates generally to IC card application field, especially electronic deposit (bankbook) or electronic purse, used as financial IC card, application field, and more particularly to a secure authentication method of electronic deposit (purse) for transaction before sale.

### Background of the Invention

At present, IC card application is getting popular and its scope is getting wider. As it is convenient to use, easy to carry, fast to operate and reliable for security etc., it is welcome by more and more users, especially in self-helping environment.

Nevertheless, payment system of present IC card is mainly pointed to transaction after sale, i.e. the payer pays first then gets services, e.g. shopping at store. For transaction before sale, i.e. the payer gets services first then pays, e.g. refueling oil with IC card, there are unsafe factors for security, especially service before sale under self-helping environment. Now, it is further explained by refueling oil with IC card:

According to the payment system of general IC card, when refueling with IC card, the procedures are: user inserts card; both IC card and card terminal are mutually authenticated; user refuels oil; refueling is ended and card terminal deducts money from IC card. It can be seen from the procedures above, during the period from user starts to refuel oil until card terminal deducts money successfully, if IC card is extracted from card terminal or power supply is interrupted or card terminal has some accident etc., then card terminal does not deduct money from IC card (known as escape card) and it will cause a series of problems.

In order to solve this problem, a Grey Lock concept is introduced to IC card refueling payment system. Grey Lock means there is a specific Mark on IC card to identify its application state of last time. If the Grey Lock Mark is clear, it means last transaction of the card is regularly ended and it can be used. If the Grey Lock Mark is set, it means last transaction is irregularly ended, then if this IC card (known as Grey Card) will be used again, then its Grey Lock Mark must be clear (unlocking grey or unlocking Grey for short) and if the money needed to be deducted in last transaction has not been deducted from the card, then a Supplementary Debit must be done.

Therefore, the procedures of refueling transaction with IC card above are changed to: user inserts card; both IC card and card terminal are mutually authenticated; card terminal judges whether it is a grey card, if it is not a grey card, then grey lock is set; user refuels oil; refueling is ended, and card terminal deducts money from IC card; card terminal unlocks grey lock on IC card. At the same time, an unlocking grey transaction is added, its procedures are: if the IC card is a grey card, then card terminal searches for corresponding grey record; card terminal judges whether the grey record matches with the one on IC card, if grey records are matched, then supplementary debit is done (if necessary) according to the grey record; card terminal unlocks grey lock on IC card. In the transaction procedures above, because supplementary debit operation and unlocking grey operation are separated, there are still hidden troubles for security: if there is only unlocking grey operation without supplementary debit operation, then the cardholder makes a profit and card distributor has a loss. Herein, "transaction beneficiary" concept is introduced for further description.

According to beneficiary of IC card unauthorized operation, the transaction (or IC card operation) is divided into positive transaction and negative transaction. The positive transaction (or IC card operation) is those transactions (or IC card operation) which have advantage to cardholder and disadvantage to card distributor, if unauthorized operation can be happened, e.g. load, change limit of overdrawn account, unlock personal identification number (PIN), update protected file on IC card etc. The negative transaction (or IC card operation) is those transactions (or IC card operation) which have disadvantage to cardholder and advantage to card distributor, if unauthorized operation can be happened, e.g. consumption etc. In general, for positive transaction, encryption key is kept at card distributor computer; and for negative transaction, encryption key is kept at card terminal, it is conventionally stored on card terminal PSAM card.

According to the definition of positive transaction and negative transaction, it can be seen that mistaken debit is a negative operation, so encryption key can be stored on PSAM card; and mistaken unlocking grey operation is a positive operation, encryption key should be stored in card distributor computer. Nevertheless, unlocking grey operation, which cannot be on-line, has to be in regular transaction procedure, so conflict happens. If encryption key of unlocked grey is put on PSAM card, then it is possible that the PSAM card will be illegally used for unlocking grey; because PSAM card is only an IC card, there is no any mechanism to limit the unlocking operation.

In state-of-the-art, encryption key of unlocked grey is put in card terminal encryption module, or part of the unlocked grey encryption key is put on card terminal encryption module and part of it is put on card terminal PSAM card. As program can be put on encryption module and encryption module has some autonomy, it can be used for secure control of unlocking grey operation. In order to make encryption module has secure control of unlocked grey, it is necessary to lock the card before service, i.e. set grey lock mark of IC card. If escape card happens during operation, card terminal will report up by network the escaped amount of money and present balance of the card; during next unlocking grey operation, with grey lock mark set and escaped amount of money and balance, which have been sent back by network, supplementary debit can be done, after that the IC card grey lock mark can be reset. There are also problems: (1) IC card is no way to judge whether the supplementary debit is legal, secure guarantee of supplementary debit can only be made by card terminal and network, this is a weak point of security; (2) as said above, unlocking operation is a positive transaction, the encryption key is put on application environment such as IC card, which cannot be controlled by card distributor.

Up till now, there is no thorough solution for this specific transaction before sale of IC card.

### Summary of the Invention

It can be seen from above analysis, kernel of the problem is that debit operation and unlocking operation are mutually independent. The conventional solution is to set up certain relationship between these two, but purpose of the invention is to combine these two operations: debit and unlocking together to form a new method for implementing secure transaction before sale for electronic deposit.

The invention is a method implementing secure transaction for electronic deposit (purse), which combines grey lock mark into the electronic deposit (purse), and the grey lock mark becomes one of attribute parameters of the electronic deposit (purse); when grey lock mark is set, any operation is invalid except operations related to reset grey lock mark.

The invention is a method implementing secure transaction for electronic deposit (purse), when IC card is locking, i.e. grey lock mark is setting, the source of locking card is being written on IC card simultaneously; when debit operation, the source of locking card is judged and debit operation and unlock grey operation are merged into one step operation, i.e. after debit is successfully done, it is unlocked automatically. The source of locking card exists in whole transaction procedure.

According to the invention technical scheme, computer can further keep an encryption key for implementing debit operation and mandatory unlock operation, this makes a grey lock IC card can implement supplementary debit and mandatory unlock grey operation on an on-line card terminal. For example, suppose there is a failure in card terminal, which causes debit cannot be made, or data cannot be sent up, or a record of this transaction has been lost, then the grey lock mark of the card can be reset with an on-line mode by an on-line card terminal.

IC card consumption transaction procedure set up by the invention method is changed to: user inserts card; both IC card and card terminal are mutually authenticated; card terminal locks grey IC card; consumption transaction; after the transaction is ended, card terminal debits from electronic deposit (purse) on IC card and unlocks grey IC card.

The locking grey IC card operation above means that IC card makes an authentication code with locking card source, transfers locking card source parameters to card terminal; card terminal makes another locking card source with same mechanism of IC card and then makes another authentication code with this another locking card source, transfers this another authentication code to IC card; IC card compares these two authentication codes to see whether they are identical, if it is, IC card makes locking operation and returns this grey lock characteristic code, made by locking card source and card terminal corresponding data, to card terminal.

Card terminal debits against electronic deposit and unlocks grey lock on IC card said above means that card terminal makes an authentication code with locking card source and debit parameters and sends this authentication code and corresponding parameters to IC card; IC card makes another authentication code with its internal locking card source, with same parameters and same mechanism, and judges whether these two authentication codes are identical, if it is, card terminal debits against electronic deposit on IC card; if this is successfully done, then card terminal clears grey lock mark simultaneously.

Further, card terminal can save authentication code needed for debiting, amount of said escape card of this time and grey lock characteristic code together to form a part of grey lock record, and sends them up to central computer; when an IC card, with an incomplete transaction ending and in-debit grey lock, is used in a card terminal with the grey lock record next time, card terminal first authenticates the grey lock characteristic code to confirm that locking card source of IC card is same as locking card source that is used to calculate debit authentication code of the grey lock record; after passing said confirmation, debit and unlocking operation are executed.

According to the invention technical scheme, the said locking card source is a procedure encryption key SESPK, which correlates with at least a temporarily created pseudo random number ICC.

Procedure encryption code, said above, SESPK = 3DES (DPK, DATA), where DPK is a consumption encryption key that is made with discrete IC card application sequence number by consumption main encryption key MPK of electronic deposit, as each IC card has different application sequence number, DPK of each IC card is different as well. DATA is a specific parameter including said temporary pseudo random number ICC, transaction sequence number of electronic deposit (purse) CTC and last two bytes of card terminal transaction sequence number TTC. It has been seen that each transaction SESPK is different as IC card application sequence number and DATA are different, so SESPK can be used as a reliable locking card source.

When locking an electronic deposit (purse), card terminal sends card terminal transaction sequence number TTC to IC card; IC card gets its own pseudo random number ICC and transaction sequence number of electronic deposit (purse) CTC; an internal procedure encryption key SESPK is created and corresponding parameters that makes the procedure encryption key and grey lock characteristic code of this time are recorded; pseudo random number ICC and transaction sequence number of electronic deposit (purse) CTC are sent to card terminal; card terminal secure authentication module or PSAM card has consumption main encryption key of electronic deposit (purse) MPK, according to IC card application sequence number, they deduce an IC card electronic deposit (purse) DPK; further, according to pseudo random number ICC, transaction sequence number of electronic deposit (purse) CTC and card terminal transaction sequence number TTC, with the same mechanism of IC card, a same procedure encryption key SESPK is created.

When debiting, card terminal calculates authentication code by using the procedure encryption key SESPK, debit amount, operation date and time etc., which are also sent to IC card; in IC card, with same data and same algorithm another authentication code is internally calculated; if these two authentication codes are identical, then IC card implements debiting and unlocking internally; if these two authentication codes are different, then no internal operation of debiting and unlocking are taken, internal error counter is incremented and an error code is returned; if internal error counter reaches certain number, then IC card is internally locked to prevent malice trial.

According to the thinking of the invention scheme, when combining grey lock mark with electronic deposit to form a specific refueling electronic deposit, except conventional functions: read balance, load, unload, consumption/withdrawal, change limit of overdrawn account etc.; refueling debit, local unlocking grey and on-line unlocking grey functions are added.

There are new refueling electronic deposit states: pre-refueling state, grey lock state and unlocked grey lock state, except convention states: idle state, load state, consumption/withdrawal state, unload state and update state; except conventional commands set, there are also new commands: INITIALIZE FOR REFUEL, LOCK FOR REFUEL, DEBIT FOR REFUEL, INITIALIZE FOR UNLOCK, DEBIT FOR UNLOCK and GET GREY STATUS command; among them INITIALIZE FOR REFUEL command is used for initializing refueling transaction, LOCK FOR REFUEL command is used for locking refueling electronic deposit with grey lock, DEBIT FOR REFUEL command is used for local refueling and unlocking grey transaction simultaneously, IMTIALIZE FOR UNLOCK command is used for initializing on-line unlocking grey transaction, DEBIT FOR UNLOCK command is used for on-line unlocking grey and making supplementary debit of refueling transaction simultaneously, GET GREY STATUS command is used for reading grey lock state and launching local unlocking grey transaction.

By using the invention technical scheme, problems in the past are thoroughly solved.

As both unlocking grey operation and debit operation are combined into one operation, hidden trouble of grey lock management during normal unlocking operation no longer exists, they can be put on PSAM according to negative transaction principle. When on-line unlocking, encryption key is put in computer according to positive transaction principle, its hidden trouble of management also no longer exists.

As both unlocking grey operation and debit operation are combined into one operation, on the one hand, illegal unlocking grey problem is transformed to correctness problem of card terminal debiting, i.e. once card terminal debiting is legal, then unlocking is also legal. On the other hand, when supplementary debit happens after escape card, because only the IC card and the PSAM of the card terminal, where the escape card has happened, know the procedure encryption key SESPK used for this supplementary debit, and card terminal PSAM does not keep SESPK after transaction is ended, so during supplementary debit only the IC card knows (internally recovering) this encryption key; during supplementary debit, debiting authentication key is the one calculated by the card terminal PSAM before SESPK is deleted, any illegally updating the SESPK or its calculating parameters (such as amount of escape card etc.) will cause failure of supplementary debit, and at the same time internal application locking mechanism of IC card can prevent malice trial; therefore it is transformed to IC card security mechanism problem and no relationship with application.

In summary, the unlocking grey problem is transformed to reliability problem of card terminal and IC card, these can be controlled effectively, and there are no any conflict with the present security mechanism of card terminal and IC card.

### Brief Description of the Drawings

Figure 1 is a refueling transaction procedure for electronic deposit of the invention embodiment.
Figure 2 is an on-line unlocking grey transaction procedure for electronic deposit of the invention embodiment.
Figure 3 is a local unlocking grey transaction procedure for electronic deposit of the invention embodiment.

### Embodiments of the invention

The following is a detail description of the invention with embodiments and drawings.

Taking refueling oil payment system as an example, combine electronic deposit with grey lock to form a special electronic deposit known as refueling electronic deposit, which has refueling debit, local unlocking grey and on-line unlocking grey functions, added for off-line refueling debit, except general electronic deposit functions, such as read balance, load, unload, consumption/withdrawal and change limit of overdrawn account etc. Refueling debit, local unlocking grey and on-line unlocking grey are new functions, they will be described in detail in the following.

During use a card, it is at one of states and in a specific state only some commands can be executed. The card has following states: idle, load, consumption/withdrawal, unload, update, pre-refueling, grey lock and unlock grey, among them pre-refueling, grey lock and unlock grey are specific states for refueling electronic deposit.

When an usage of a IC card has been selected, first the card enters idle state; after receiving a command from a card terminal, the card must check whether the command is allowed for the present state. If the command is executed successfully, then the card enters another state (or the same state) as shown in table 1. If the command is not executed successfully, then the card enters idle state.

Table 1 shows the state changes after successfully executing. First row is present states when command is issuing, first column is commands to be issued and the whole table shows the states after a command is successfully executed.

The shade part of table 1 shows a state where a command to the card is not available (N/A). This means that the card does not execute command and responses a "6901" state, i.e. don't accept command state (N/A), to card terminal. As the command cannot be executed, so if the card is originally at grey lock state, then the result is still at grey lock state; if the card is originally at other states, then the result is at idle state.

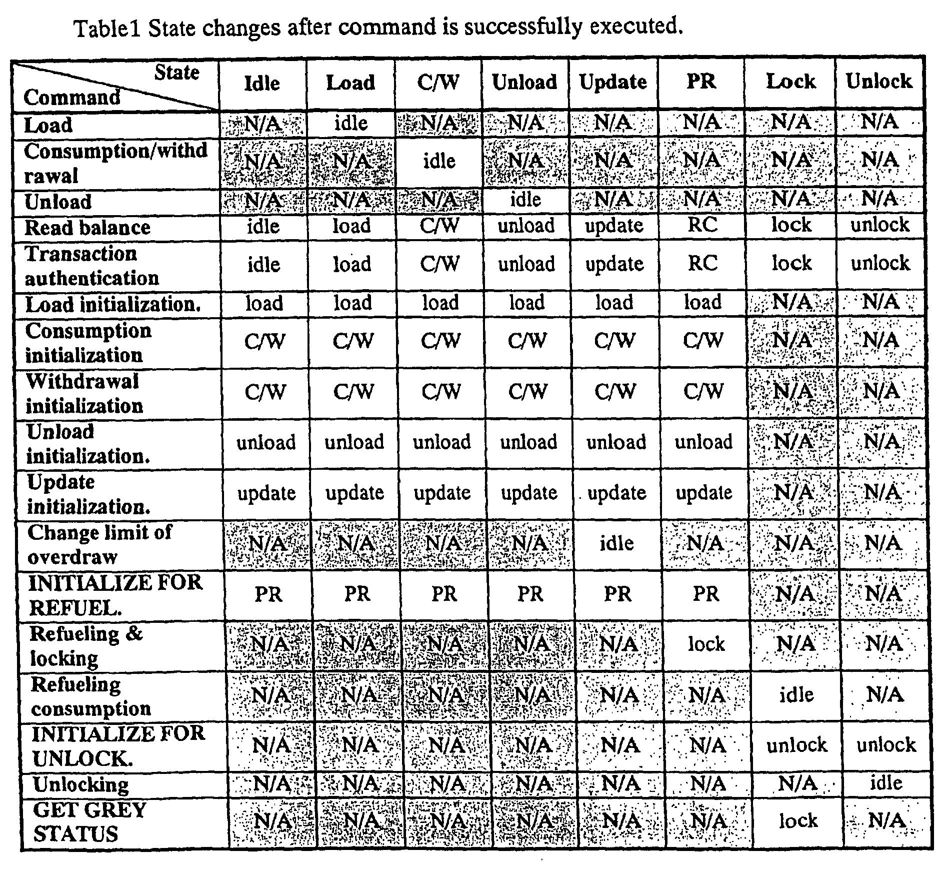

In table 1 above, C/W represents Consumption/Withdrawal, PR represents Pre-refueling, RC represents Refueling consumption, lock represents locking grey, and unlock represents unlocking grey.

Table 2 defines command type, code of command byte and parameters P1 and P2 used for refueling electronic deposit. In command set, except general command of electronic deposit, some specific commands are added: INITIALIZE FOR REFUEL, LOCK FOR REFUEL, refuel, INITIALIZE FOR UNLOCK, unlocking grey and GET GREY STATUS. The INITIALIZE FOR REFUEL command is used for initializing refueling debit transaction. The LOCK FOR REFUEL command is used for locking grey refueling electronic deposit. The refuel command is used for local refueling oil transaction and unlocking grey simultaneity. The unlocking Initialization command is used for initializing on-line unlocking grey transaction. The unlocking grey command is used for on-line unlocking grey transaction and supplementary debit simultaneity. The GET GREY STATUS command is used to read grey lock state.

**TABLE 2**

| Command type byte and instruction bytes | | | | |
|---|---|---|---|---|
| **Command** | **CLA** | **INS** | **P1** | **P2** |
| Update PIN | 80 | 5E | 01 | 00 |
| Load | 80 | 52 | 00 | 00 |
| Consumption/withdrawal | 80 | 54 | 01 | 00 |
| Unload | 80 | 54 | 03 | 00 |
| Read balance | 80 | 5C | 00 | 0X |
| Transaction authentication | 80 | 5A | 00 | XX |
| Withdrawal initialization | 80 | 50 | 02 | 01 |
| Load initialization | 80 | 50 | 00 | 0X |
| Consumption initialization | 80 | 50 | 01 | 0X |
| Unload initialization | 80 | 50 | 05 | 01 |
| Change overdrawn limit initialization | 80 | 50 | 04 | 01 |
| Reload PIN | 80 | 5E | 00 | 00 |
| Change overdrawn limit | 80 | 58 | 00 | 00 |
| * INITIALIZE FOR REFUEL | E0 | 50 | 01 | 01 |
| * Refueling and locking | E0 | 50 | 02 | 01 |
| * Refueling consumption | E0 | 54 | 01 | 00 |
| *INITIALIZE FOR UNLOCK | E0 | 50 | 03 | 01 |
| * Unlocking | E0 | 54 | 01 | 01 |
| * GET GREY STATUS | E0 | 50 | 04 | 01 |

In the following, each of new commands is described in detail.
1. INITIALIZE FOR REFUEL command:
INITIALIZE FOR REFUEL command is used for initializing refueling debit transaction. Its command message is shown on table 3, data field of the command message is shown on table 4, and response message data field of successful execution is shown on table 5. If it is an unsuccessful execution, then only send back the response message with SW1 and SW2. If it is a successful execution, the state code of response message is "9000". On table 6, the possible error states, sent by IC card, are listed, where ED is refueling electronic deposit.

**Table 3**

| INITIALIZE FOR REFUEL command message | |
|---|---|
| **Code** | **Value** |
| CLA | E0 |
| INS | 50 |
| P1 | 01 |
| P2 | 01 used for refueling, others reserved |
| L_{c} | 0B |
| Data | See table 4 |
| Lₑ | 10 |

**Table 4**

| INITIALIZE FOR REFUEL command message data field | |
|---|---|
| **Description** | **Length (bytes)** |
| Encryption key index | 1 |
| Terminal number | 6 |
| Terminal transaction sequence number | 4 |

**Table 5**

| INITIALIZE FOR REFUEL response message data field | |
|---|---|
| **Description** | **Length (bytes)** |
| ED balance | 4 |
| ED off-line transaction sequence number | 2 |
| Encryption key version | 1 |
| Algorithm identifier | 1 |
| Pseudo random number (ICC) | 1 |
| MAC1 | 4 |

**Table 6**

| INITIALIZE FOR REFUEL error states | | |
|---|---|---|
| **SW1** | **SW2** | **Description** |
| 69 | 01 | Command unaccepted (invalid state i.e. grey lock source has been created) |
| 65 | 81 | Memory error |
| 69 | 85 | Use condition unsatisfied |
| 94 | 03 | Encryption key index unsupported |
| 94 | 02 | Transaction counter at maximum |

2. LOCK FOR REFUEL command:
LOCK FOR REFUEL command is used for locking grey refueling electronic deposit. Its command message is shown on table 7, data field of the command message is shown on table 8, and response message data field of successful execution is shown on table 9. If it is an unsuccessful execution, then only send back the response message with SW1 and SW2. If it is a successful execution, the state code of response message is "9000". On table 10, the possible error states sent by IC card are listed.

**Table 7**

| LOCK FOR REFUEL command message | |
|---|---|
| **Code** | **Value** |
| CLA | E0 |
| INS | 50 |
| P1 | 02 |
| P2 | 01 |
| L_{c} | 0B |
| Data | See table 8 |
| Lₑ | 08 |

**Table 8**

| LOCK FOR REFUEL command message data field | |
|---|---|
| **Description** | **Length (bytes)** |
| Transaction date (terminal) | 4 |
| Transaction time (terminal) | 3 |
| MAC2 | 4 |

**Table 9**

| LOCK FOR REFUEL response message data field | |
|---|---|
| **Description** | **Length (bytes)** |
| TAC | 4 |
| MAC3 | 4 |

**Table 10**

| LOCK FOR REFUEL error states | | |
|---|---|---|
| **SW1** | **SW2** | **Description** |
| 69 | 01 | Command unaccepted (invalid state) |
| 65 | 81 | Memory error |
| 69 | 85 | Use condition unsatisfied |
| 93 | 02 | MAC invalid |

3. DEBIT FOR REFUEL command:
DEBIT FOR REFUEL command is used for local refueling oil debit transaction and unlocking grey simultaneity. Its command message is shown on table 11, data field of the command message is shown on table 12, and response message data field of successful execution is shown on table 13. If it is an unsuccessful execution, then only send back the response message with SW1 and SW2. If it is a successful execution, the state code of response message is "9000". On table 14, the possible error states sent by IC card are listed.

**Table 11**

| DEBIT FOR REFUEL command message | |
|---|---|
| **Code** | **Value** |
| CLA | E0 |
| INS | 54 |
| P1 | 01 |
| P2 | 00 |
| L_{c} | 19 |
| Data | See table 12 |
| Lₑ | 08 |

**Table 12**

| DEBIT FOR REFUEL command message data field | |
|---|---|
| **Description** | **Length (bytes)** |
| Transaction amount | 4 |
| ED off-line transaction sequence number | 2 |
| Terminal number | 6 |
| Terminal transaction sequence number | 4 |
| Transaction date (terminal) | 4 |
| Transaction time (terminal) | 3 |
| GMAC | 4 |

**Table 13**

| DEBIT FOR REFUEL response message data field | |
|---|---|
| **Description** | **Length (bytes)** |
| TAC | 4 |
| MAC4 | 4 |

**Table 14**

| DEBIT FOR REFUEL error states | | |
|---|---|---|
| **SW1** | **SW2** | **Description** |
| 69 | 01 | Command unaccepted (invalid state) |
| 65 | 81 | Memory error |
| 69 | 85 | Use condition unsatisfied |
| 67 | 00 | Length error |
| 93 | 02 | MAC invalid |

4. INITIALIZE FOR UNLOCK command:
INITIALIZE FOR UNLOCK command is used for initializing on-line unlocking grey transaction. Its command message is shown on table 15, data field of the command message is shown on table 16, and response message data field of successful execution is shown on table 17. If it is an unsuccessful execution, then only send back the response message with SW1 and SW2. If it is a successful execution, the state code of response message is "9000". On table 18, the possible error states sent by IC card are listed.

**Table 15**

| INITIALIZE FOR UNLOCK command message | |
|---|---|
| **Code** | **Value** |
| CLA | E0 |
| INS | 50 |
| P1 | 03 |
| P2 | 01 for refueling transaction, others reserved |
| L_{c} | 07 |
| Data | See table 16 |
| Lₑ | 10 |

**Table 16**

| INITIALIZE FOR UNLOCK command message data field | |
|---|---|
| **Description** | **Length (bytes)** |
| Encryption key index | 1 |
| Terminal number | 6 |

**Table 17**

| INITIALIZE FOR UNLOCK response message data field | |
|---|---|
| **Description** | **Length (bytes)** |
| ED balance | 4 |
| ED off-line transaction sequence number | 2 |
| Encryption key version | 1 |
| Algorithm identifier | 1 |
| Pseudo random number (ICC) | 4 |
| MAC1 | 4 |

**Table 18**

| INITIALIZE FOR UNLOCK error states | | |
|---|---|---|
| **SW1** | **SW2** | **Description** |
| 69 | 01 | Command unaccepted (invalid state i.e. grey lock has not been created) |
| 65 | 81 | Memory error |
| 69 | 85 | Use condition unsatisfied |
| 94 | 03 | Encryption key index unsupported |
| 94 | 02 | Transaction counter at maximum |

5. DEBIT FOR UNLOCK command:
DEBIT FOR UNLOCK command is used for on-line unlocking grey transaction and supplementary debit simultaneity. Its command message is shown on table 19, data field of the command message is shown on table 20, and response message data field of successful execution is shown on table 21. If it is an unsuccessful execution, then only send back the response message with SW1 and SW2. If it is a successful execution, the state code of response message is "9000". On table 22, the possible error states sent by IC card are listed.

**Table 19**

| DEBIT FOR UNLOCK command message | |
|---|---|
| **Code** | **Value** |
| CLA | E0 |
| INS | 54 |
| P1 | 01 |
| P2 | 01 |
| L_{c} | 0F |
| Data | See table 20 |
| Lₑ | 04 |

**Table 20**

| DEBIT FOR UNLOCK command message data field | |
|---|---|
| **Description** | **Length (bytes)** |
| Transaction amount | 4 |
| Transaction date (computer) | 4 |
| Transaction time (computer) | 3 |
| MAC2 | 4 |

**Table 21**

| DEBIT FOR UNLOCK response message data field | |
|---|---|
| **Description** | **Length (bytes)** |
| MAC3 | 4 |

**Table 22**

| DEBIT FOR UNLOCK error states | | |
|---|---|---|
| **SW1** | **SW2** | **Description** |
| 69 | 01 | Command unaccepted (invalid state) |
| 65 | 81 | Memory error |
| 69 | 85 | Use condition unsatisfied |
| 67 | 00 | Length error |
| 93 | 02 | MAC invalid |

6. GET GREY STATUS command:
GET GREY STATUS command is used to get grey lock state. Its command message is shown on table 23, there is no data field of the command message, and response message data field of successful execution is shown on table 24. If it is an unsuccessful execution, then only send back the response message with SW1 and SW2. If it is a successful execution, the state code of response message is "9000". On table 25, the possible error states sent by IC card are listed.

**Table 23**

| GET GREY STATUS command message | |
|---|---|
| **Code** | **Value** |
| CLA | E0 |
| INS | 50 |
| P1 | 04 |
| P2 | 01 |
| L_{c} | Non-existence |
| Data | Non-existence |
| Lₑ | 11 |

**Table 24**

| GET GREY STATUS response message data field | |
|---|---|
| **Description** | **Length (bytes)** |
| Grey flag | 1 |
| ED balance | 4 |
| ED off-line transaction sequence number | 2 |
| ED on-line transaction sequence number | 2 |
| MAC3 | 4 |
| TAC | 4 |
| MAC3 and TAC are return value from IC card when grey lock. | |

**Table 25**

| GET GREY STATUS error states | | |
|---|---|---|
| **SW1** | **SW2** | **Description** |
| 69 | 01 | Command unaccepted (invalid state) |
| 65 | 81 | Memory error |
| 69 | 85 | Use condition unsatisfied |
| 67 | 00 | Length error |

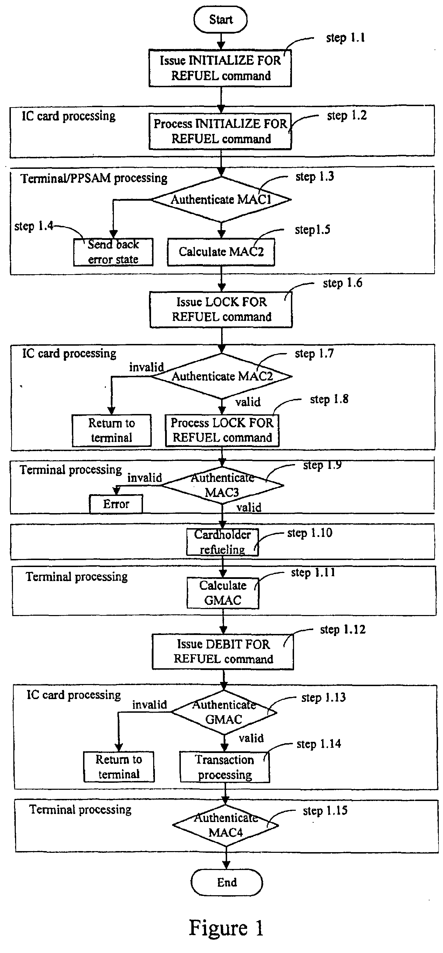

In the following, transaction procedure of extended applications: refueling, local unlocking grey and on-line unlocking grey, are described in detail.
1. Refueling transaction:
   it allows cardholder uses refueling electronic deposit to refuel at IC card refueling machine, it can be an off-line transaction. Refueling transaction asks for personal identification number (PIN). Reference to Fig. 1.
   step 1.1: card terminal issues an INITIALIZE FOR REFUEL command to start refueling transaction.
   Step 1.2: after receiving INITIALIZE FOR REFUEL command, the IC card deals with the command, it includes:
      (1) check whether the IC card is in grey lock state, if it is, return state code "6901" (unsupported encryption key index) without other data;
      (2) check whether encryption key index included in the command is supported by the IC card, if it is not supported, return state code "9403" (unsupported encryption key index) without other data;
      (3) after passing above checks, the IC card will makes a pseudo random number ICC, a procedure encryption key SESPK and a message authentication code MAC1. The SESPK is used for refueling transaction of refueling electronic deposit. The SESPK is formed by SESPK = 3DES (DPK, DATA), where DPK is the consumption encryption key of refueling electronic deposit, DATA includes: a pseudo random number ICC, an off-line transaction sequence number CTC of refueling electronic deposit, the last two bytes of card terminal transaction sequence number TTC and 3DES is triple length of DES algorithm.

      SESPK works with following data in sequence to calculate MAC1:
      ---- balance of refueling electronic deposit;
      ---- transaction type identifier ("10" for refueling transaction);
      ---- card terminal number (the card terminal which issues LOCK FOR REFUEL command).
   Step 1.3: authenticating MAC1.
      With the pseudo random number ICC and off-line transaction sequence number of refueling electronic deposit returned by IC card, the refueling security authentication module PSAM makes a procedure encryption key SESPK and authenticates MAC1; if MAC1 is valid, then next step is step 1.5, otherwise step 1.4.
   Step 1.4: send back error state, card terminal should stop refueling.
   Step 1.5: calculating MAC2.
      After card terminal validates that refueling transaction can be proceeded, a message authentication code MAC2 will be made for IC card to validate PSAM.
      SESPK works with following data in sequence to calculate MAC2:
      ---- transaction type identifier ("10" for refueling transaction);
      ---- card terminal number (the card terminal which issues LOCK FOR REFUEL command);
      ---- transaction date (the card terminal which issues LOCK FOR REFUEL command);
      ---- transaction time (the card terminal which issues LOCK FOR REFUEL command).
   Step 1.6: card terminal issues LOCK FOR REFUEL command.
   Step 1.7: authenticating MAC2.
      After receiving LOCK FOR REFUEL command, IC card will authenticate MAC2; if it is valid, then next step is step 1.8, otherwise returns error state "9302" (MAC is invalid) to the card terminal.
   Step 1.8: LOCK FOR REFUEL command processing.
      IC card writes the pseudo random number ICC, card terminal number, card terminal transaction sequence number, transaction date and transaction time to an internal file, in order to recover IC card data if power supply is interrupted during refueling; sets refueling electronic deposit in grey lock state; except DEBIT FOR REFUEL and DEBIT FOR UNLOCK commands, inhibits IC card operations (such as load, unload, consumption/withdrawal, and change limit of overdrawn account etc.), which will change balance of refueling electronic deposit. When card terminal issues these inhibited commands, an error state "6989" (card has been locked) will be returned to the card terminal.
      The off-line transaction sequence number of refueling electronic deposit is incremented by IC card.
      IC card makes a message authentication code MAC3 for PSAM to check whether IC card is legal, and writes MAC3 into an internal file at the same time. MAC3 is included in response message of LOCK FOR REFUEL command and response message of GET GREY STATUS command, which are transferred from IC card to PSAM (through card terminal). SESPK works with following data to calculate MAC3:
      ---- balance of refueling electronic deposit;
      ---- off-line transaction sequence number (before incremented) of refueling electronic deposit;
      ---- transaction type identifier ("10" for refueling transaction);
      ---- card terminal number (the card terminal which issues LOCK FOR REFUEL command);
      ---- transaction date (the card terminal which issues LOCK FOR REFUEL command);
      ---- transaction time (the card terminal which issues LOCK FOR REFUEL command).

      With the same mechanism, IC card makes a transaction signature TAC by using transaction authentication encryption key DTK directly, and writes TAC into an internal file at the same time. TAC is included in response message of LOCK FOR REFUEL command and response message of GET GREY STATUS command, which are transferred from IC card to PSAM (through card terminal). If an exception happens such as escape card, transaction is impossible to go on, then TAC will be written into card terminal transaction itemized list in order to transfer to computer for locked grey card transaction authentication. Followings are main elements to make TAC:
      ---- balance of refueling electronic deposit;
      ---- off-line transaction sequence number (before incremented) of refueling electronic deposit;
      ---- transaction type identifier;
      ---- card terminal number;
      ---- transaction date (card terminal);
      ---- transaction time (card terminal).
   Step 1.9 Authenticating MAC3.
      Card terminal authenticate the validation of MAC 3, if it is valid, then transaction processing goes to step 1.10, otherwise card terminal will make an exception processing.
   Step 1.10 Cardholder refueling.
      During refueling, IC card is allowed to be power-off. After power-off, the IC card can be inserted again; and after transaction makes preprocessing (authenticating encryption code, selecting application), step 1.11 can be executed continually.
   Step 1.11 Making GMAC.
      Refueling consumption secure authentication module PSAM makes a message authentication code GMAC with procedure encryption key SESPK for IC card to authenticate whether the PSAM is legal.
      SESPK works with following datum to calculate GMAC:
      ---- refueling transaction amount.
   Step 1.12 Card terminal issues a DEBIT FOR REFUEL command.
   Step 1.13 Authenticating GMAC.
      After receiving DEBIT FOR REFUEL command, IC card first authenticates whether the proposed off-line transaction sequence number of IC card is matched, if it is unmatched, then an error returns without affecting error counter.
      Secondly, IC card authenticates whether GMAC is valid; if it is valid, then transaction processing executes step 1.14 continually; if it is invalid, then error state "9302" (MAC invalid) is returned to card terminal and error counter in IC card is decreased at the same time; when the error counter is zero, the IC card is locked permanently in order to prevent a malice trial.
   Step 1.14 Transaction processing.
      IC card subtracts refueling transaction amount from refueling electronic deposit balance and recovers refueling electronic deposit state from grey lock state to normal state. IC card must perform all steps above completely or without performing any step; if balance update or refueling electronic deposit recovery state are unsuccessful, then transaction itemized list should not be revised also.
      IC card makes a message authentication code MAC4 for PSAM to check whether the IC card is legal, the MAC4 is included in response message of REFUEL command sent from IC card to PSAM (through card terminal). DPK works in the data shown below, as calculation inputs, for calculating MAC4:
      ---- amount of refueling transaction;
      ---- transaction type identifier;
      ---- card terminal number;
      ---- transaction date (computer);
      ---- transaction time (computer).

      With the same mechanism, IC card also makes a transaction signature TAC by using transaction authentication encryption key DTK directly. TAC will be written into transaction itemized list of card terminal in order to transfer to computer later for transaction authentication. Followings are main elements for making TAC:
      ---- transaction amount;
      ---- transaction type identifier;
      ---- card terminal number (the card terminal which issues DEBIT FOR REFUEL command);
      ---- card terminal transaction sequence number (the card terminal which issues DEBIT FOR REFUEL command);
      ---- transaction date (the card terminal which issues DEBIT FOR REFUEL command);
      ---- transaction time (the card terminal which issues DEBIT FOR REFUEL command).

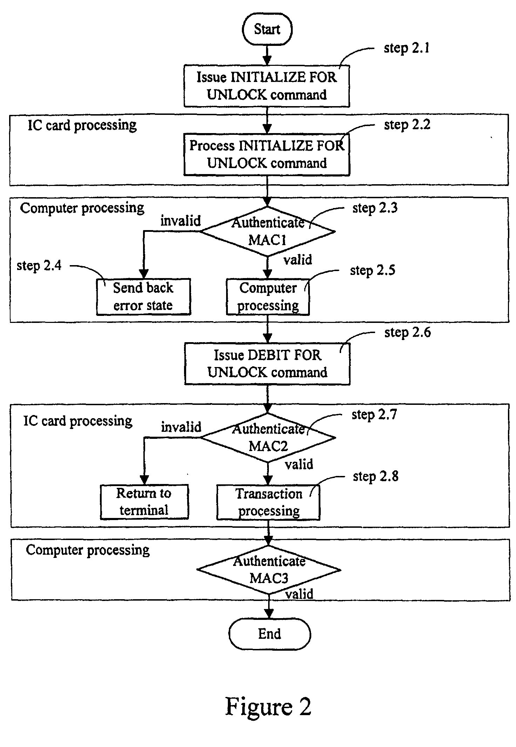

      IC card will use following data to form a record for updating transaction itemized list.
      --- off-line transaction sequence number of refueling electronic deposit;
      --- transaction amount;
      --- transaction type identifier;
      --- card terminal number (the card terminal which issues DEBIT FOR REFUEL command);
      --- transaction date (the card terminal which issues DEBIT FOR REFUEL command);
      --- transaction time (the card terminal which issues DEBIT FOR REFUEL command).
   Step 1.15 Authenticating MAC4.
      After receiving MAC4 comes from IC card (through card terminal), PSAM authenticates MAC4 validation, the result is transferred to card terminal for taking necessary measures.
2. On-line unlocking grey transaction
   On-line unlocking grey transaction allows a cardholder to unlock a grey lock card (recovering to normal state) and supplementary debit simultaneity. This transaction must be made on an on-line card terminal and the cardholder must propose PIN. Reference to Fig. 2.
   Step 2.1 card terminal issues an INITIALIZE FOR UNLOCK command to start refueling transaction.
   Step 2.2 after IC card has received INITIALIZE FOR UNLOCK command, it deals with this command, includes:
      (1) check whether the IC card is at grey lock state, if it is not, then returns state code "6901" (illegal command) without any other data;
      (2) check whether the encryption key index included in the command is supported by IC card, if it is not supported, then returns state code "9403" (unsupported encryption key index) without any other data;
      (3) after passing above checks, the IC card will makes a pseudo random number ICC, a procedure encryption key SESULKK and a message authentication code MAC1 for computer to check whether the unlocking grey transaction and the IC card are legal. The procedure encryption key SESULKK is made by unlocking grey encryption key DULKK with the same mechanism of making consumption encryption key and used for unlocking grey transaction. Inputting data for making procedure encryption key SESULKK are as following:

      SESULKK: pseudo random number ICC ∥ transaction sequence number of refueling electronic deposit ∥ "8000".
      SESULKK works with following data in sequence to calculate MAC1:
      ---- balance of refueling electronic deposit;
      ---- transaction type identifier ("11" for unlocking grey transaction);
      ---- card terminal number.

      IC card send response message of INITIALIZE FOR UNLOCK command to card terminal for processing, if the returning state is not "9000", then card terminal will stop the transaction.
      After receiving response message of INITIALIZE FOR UNLOCK command, card terminal sends an allowance request message, including data shown in table 17, of unlocking grey to card distributor computer.
   Step 2.3 Authenticating MAC1
      Computer makes SESULKK and checks whether MAC1 is valid, if it is valid, then executes step 2.5, otherwise executes step 2.4.
   Step 2.4 returning error state
      When there are conditions cannot be accepted by unlocking grey transaction, computer will inform card terminal and card terminal should take necessary measures to deal with.
   Step 2.5 Computer processing
      After confirming that load transaction can be made, computer makes a message authentication code MAC2 for checking whether the computer is legal by IC card. SESULKK works with the following data in sequence to calculate MAC2:
      ---- supplementary debit amount of transaction;
      ---- transaction type identifier;
      ---- card terminal number;
      ---- transaction date (computer);
      ---- transaction time (computer).

      Computer sends an unlocking transaction accepted message to card terminal, including MAC2, transaction date (computer) and transaction time (computer).
      Step 2.6 when card terminal has received the unlocking transaction accepted message from computer; card terminal will send an DEBIT FOR UNLOCK command to IC card to update balance of refueling electronic deposit and to recover refueling electronic deposit to normal state.
   Step 2.7 authenticating MAC2
      After receiving DEBIT FOR UNLOCK command, IC card authenticates whether MAC2 is valid; if it is valid, transaction executes step 2.8 continually, otherwise error state "9302" (MAC invalid) is sent back to card terminal.
   Step 2.8 transaction processing
      IC card subtracts supplementary debit amount of transaction from balance of refueling electronic deposit on card, increments on-line transaction sequence number of refueling electronic deposit, and recovers refueling electronic deposit state from grey lock to normal. IC card must perform all steps above completely or without performing any one step. If balance or sequence number or refueling electronic deposit state are updated unsuccessfully, then transaction itemized list also should not be updated. IC card makes a message authentication code MAC3 for checking whether IC card is legal by computer. MAC3 is included in response message of DEBIT FOR UNLOCK command transferred from card to computer (through card terminal). SESULKK works with following data to calculate MAC3:
      ---- balance of refueling electronic deposit;
      ---- on-line transaction sequence number of refueling electronic deposit (before increment);
      ---- supplementary debit amount;
      ---- transaction type identifier;
      ---- card terminal number;
      ---- transaction date (computer);
      ---- transaction time (computer).

      IC card also makes a transaction signature TAC by using transaction authentication encryption key DTK directly with the same mechanism. TAC will be written into card terminal transaction itemized list for transferring to computer later to authenticate the transaction. Followings are main elements for making TAC:
      ---- balance of refueling electronic deposit;
      ---- on-line transaction sequence number of refueling electronic deposit (before increment);
      ---- supplementary debit amount;
      ---- transaction type identifier;
      ---- card terminal number;
      ---- transaction date (computer);
      ---- transaction time (computer).

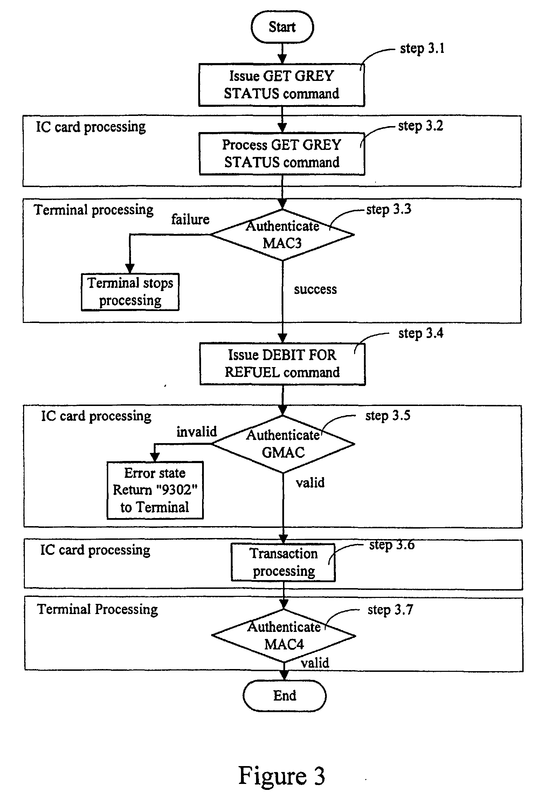

      IC card uses following data to form a record for updating transaction itemized list:
      ---- on-line transaction sequence number of refueling electronic deposit;
      ---- supplementary debit amount;
      ---- transaction type identifier;
      ---- card terminal number;
      ---- transaction date (computer);
      ---- transaction time (computer).
   Step 2.9 authenticating MAC3
      When MAC3 from IC card (through card terminal) has been received, validation of MAC3 should be authenticated, if it is valid, then step 2.10 will be executed, otherwise computer will send an error message to card terminal.
   Step 2.10 returning acknowledgement
      When step 2.9 has been successfully completed, computer takes corresponding processing.
3. Local unlocking grey transaction
   Local unlocking grey transaction allows cardholder to make a supplementary debit and to unlock grey (recovering to normal state). This transaction must be done on the card terminal that has escape card record of last time. Cardholder must propose PIN to perform unlock grey transaction. Reference to Fig. 3.
   Step 3.1 card terminal issues a GET GREY STATUS command to launch local unlock grey transaction.
   Step 3.2 when IC card has received GET GREY STATUS command, IC card sends grey mark state (Grey flag ) of electronic deposit, balance of electronic deposit, on-line transaction sequence number of electronic deposit, off-line transaction sequence number of electronic deposit, MAC3 and TAC when locking to card terminal through GET GREY STATUS command response message.
   Step 3.3 authenticating MAC3
      When card terminal has confirmed that the electronic deposit of IC card is in grey lock state, it will compare the MAC3 received with MAC3 on escape card record.
   Step 3.4 card terminal issues a DEBIT FOR REFUEL command.
   Step 3.5 authenticating GMAC
      After receiving DEBIT FOR REFUEL command, IC card authenticates whether off-line transaction sequence number of IC card CTC submitted by card terminal is matched, if it is unmatched, returns directly without affecting error counter.
      IC card should authenticate validation of GMAC. If it is valid, transaction processing will continue step 3.6, otherwise error state "9302" (MAC is invalid) will be sent back to card terminal. At the same time, IC card internal error counter decrements, if the error counter is zero, the IC card is locked permanently in order to prevent a malice trial.
      SESPK works with following datum to calculate GMAC:
      ---- refueling transaction amount.
   Step 3.6 transaction processing
      IC card subtracts refueling transaction amount from refueling electronic deposit balance on the card, and recovers from grey lock state to normal state. IC card must perform all steps above completely or without performing any one step. If balance or refueling electronic deposit state are updated unsuccessfully, then transaction itemized list also should not be updated.
      IC card makes a message authentication code MAC4 for PSAM to check whether the IC card is legal. MAC4 is included in response message of DEBIT FOR REFUEL command sent from the card to PSAM (through card terminal) as an input for MAC4 calculation. DPK works on the following datum to calculate MAC4:
      ---- refueling transaction amount.

      IC card also makes a transaction signature TAC by using transaction authentication encryption key DTK directly with the same mechanism. TAC will be written into card terminal transaction itemized list for transferring to computer later to authenticate the transaction. Followings are main elements for making TAC:
      ---- transaction amount;
      ---- transaction type identifier;
      ---- card terminal number (the card terminal which issues DEBIT FOR REFUEL command);
      ---- card terminal transaction sequence number (the card terminal which issues DEBIT FOR REFUEL command);
      ---- transaction date (the card terminal which issues DEBIT FOR REFUEL command);
      ---- transaction time (the card terminal which issues DEBIT FOR REFUEL command).

      IC card uses following data to form a record for updating transaction itemized list:
      ---- off-line transaction sequence number of refueling electronic deposit;
      ---- transaction amount;
      ---- transaction type identifier;
      ---- card terminal number (the card terminal which issues DEBIT FOR REFUEL command);
      ---- transaction date (the card terminal which issues DEBIT FOR REFUEL command);
      ---- transaction time (the card terminal which issues DEBIT FOR REFUEL command).
   Step 3.7 authenticating MAC4
      After receiving MAC4 from IC card (through card terminal), PSAM would authenticate MAC4 validation. The result of authentication is sent to card terminal for taking necessary measures.

In the application of refueling electronic deposit, metadata definition includes:
1. transaction type identifier:
10 ---- refueling
11 ---- unlock grey
12 ---- local unlock grey
other transaction type identifiers are same as state-of-the-art.
2. encryption key relationship:
special encryption keys used for refueling electronic deposit are all double length DEA encryption key (128 bits).

| **Encryption key** | **Card distributor bank** | **IC card** | **POS. (PSAM)** |
|---|---|---|---|
| Encryption key used for unlocking transaction | Unlock grey encryption main key (MULKK) | Unlock encryption sub-key (DULKK) | N/A |

Other encryption key relationship refers to state-of-the-art definition.

IC card internal changes includes:
1. Each refueling electronic deposit has a corresponding internal file used for storing pseudo random number ICC, card terminal number, card terminal transaction sequence number, transaction date, transaction time and MAC2 at grey lock state. The internal file is kept when power supply of IC card is interrupted for recovery.
2. Operating refueling electronic deposit
   When IC card has received a command for refueling electronic deposit, internal operations needed are:
   ---- check whether the refueling electronic deposit is at grey lock state, if it is not, enter idle state;
   ---- if it is at grey lock state, from internal file IC card recovers pseudo random number ICC, card terminal number, card terminal transaction sequence number, transaction date, transaction time and MAC2 at last locking; and recovers procedure encryption key SESPK with the same mechanism of recovering data.

## Claims

1. A method for implementing secure transaction for electronic deposit (purse), comprising:
combining a grey lock mark into a electronic deposit (purse), and making the grey lock mark as one of attribute parameters of the electronic deposit (purse);
while setting a grey lock mark on a IC card to lock grey the IC card, recording a first locking card source by the IC card simultaneously;
while debiting, judging the locking card source, and merging debit operation and unlocking grey operation into one step operation on a IC card, after a successful debiting, resetting the grey lock mark to unlock grey the IC card automatically.

2. The method according to claim 1, further comprising:
storing an encryption key, implementing debit and compulsorily unlock grey, in a computer to make supplementary debit and compulsorily unlocking grey operation for an locked grey IC card on an on-line card terminal with on-line mode.

3. The method according to claim 1, further comprising:
inserting a IC card to a card terminal;
authenticating both the IC card and the card terminal mutually;
locking grey the IC card by the card terminal;
consumption;
after ending consumption transaction, debiting from an electronic deposit (purse) on the IC card and unlocking grey the IC card by the card terminal.

4. The method according to claim 3, wherein said locking grey the IC card comprises:
creating an first authentication code by the IC card according to the first locking card source and transferring necessary parameters of creating the first locking card source to the card terminal simultaneously;
with same mechanism as the IC card creating a second locking card source by the card terminal, and with the second locking card source creating a second authentication code and sending the second authentication code to the IC card by card terminal;
comparing by the IC card whether the first authentication code and the second authentication code are identical, if it is, locking grey the IC card and sending back a grey lock characterized code, created with the first locking card source and corresponding data, to the card terminal;
wherein said debiting from an electronic deposit (purse) on the IC card and unlocking grey the IC card by the card terminal comprises:
creating a third authentication code by the card terminal according to the second locking card source and necessary parameters for debiting, and sending the third authentication code and corresponding parameters together to the IC card;
creating a fourth authentication code by the IC card with the first locking card source, corresponding parameters and same mechanism;
comparing by the IC card whether the third authentication code and the fourth authentication code are identical, if it is, debiting from an electronic deposit on the IC card and resetting the grey lock mark simultaneously after debiting successfully.

5. The method according to claim 4, further comprising:
storing the third authentication code needed for debiting, amount of money of an escape card and the grey lock characterized code together as part of a grey record, and sending up to central computer by the card terminal;
for an IC card with an incomplete ending transaction and without debiting and unlocking last time, authenticating the grey lock characterized code by card terminal next time, which has kept the said grey record, to confirm that the first locking card source of the IC card is same as the second locking card source for calculating the third authentication code in said grey record; after passing this confirmation, executing debit and unlocking grey operation.

6. The method according to claim 1, wherein said first locking card source is a procedure encryption key (SESPK), correlating with at least a pseudo random number (ICC) created temporarily by the IC card.

7. The method according to claim 6, wherein said procedure encryption key (SESPK) = 3DES (DPK, DATA), where DPK is consumption encryption key of electronic deposit (purse), getting from consumption main encryption key (MPK) based on discrete the application sequence number of the IC card; and DATA is a specific parameter including a temporarily made pseudo random number (ICC) of said IC card, a transaction sequence number of electronic deposit (purse) (CTC), last two bytes of card terminal transaction sequence number (TTC).

8. The method according to claim 6 or 7, wherein when locking grey the IC card, comprising:
sending a card terminal transaction sequence number (TTC) from the card terminal to the IC card;
getting a pseudo random number (ICC) and an electronic deposit (purse) transaction sequence number (CTC) of the IC card;
creating a first procedure encryption key (SESPK) by the IC card and recording corresponding parameters of this creating and also creating and recording a grey lock characterized code of this time at the same time;
sending the pseudo random number (ICC), the electronic deposit (purse) transaction sequence number (CTC) from the IC card to the card terminal, which keeping a consumption main encryption key (MPK) in a security authentication module (PSAM);
deriving the electronic deposit (purse) DPK on the IC card with a application sequence number of the IC card by the security authentication module (PSAM); and,
creating a second procedure encryption key (SESPK) by the card terminal using the pseudo random number (ICC), the electronic deposit (purse) transaction sequence number (CTC), the card terminal transaction sequence number (TTC) and same mechanism as the IC card.
When debiting, comprising:
calculating a first authentication code by the card terminal with the second procedure encryption key (SESPK), debit amount, operation date and time etc., and sending the first authentication code, the second procedure encryption key (SESPK), debit amount, operation date and time etc., to the IC card;
calculating a second authentication code by the IC card with the first procedure encryption key (SESPK), same data and algorithm;
comparing by the IC card whether the first authentication code and the second authentication code are identical, if it is, then debiting and unlocking, if it is not, then without doing debiting and unlocking, but incrementing a internal error counter and returning an error code;
locking the IC card application internally to prevent malice trial, when the internal error counter at a certain number.

9. The method according to claim 1, wherein when merging a grey lock mark into a electronic deposit to form a special refueling electronic deposit, except conventional functions: read balance, load, unload, consumption/withdrawal, changing limit of overdraw account etc. adding functions: refueling transaction, local unlocking grey transaction and on-line unlocking grey transaction.

10. The method according to claim 9, wherein except conventional state of the refueling electronic deposit (purse): idle, load, consumption/withdrawal, unload, updating, also existing state of pre-refueling, grey lock and unlocked grey; except conventional command, adding command of INITIALIZE FOR REFUEL, LOCK FOR REFUEL, DEBIT FOR REFUEL, INITIALIZE FOR UNLOCK, DEBIT FOR UNLOCK and GET GREY STATUS in the command set, the INITIALIZE FOR REFUEL command used for refueling consumption transaction initialization, the LOCK FOR REFUEL command used for making grey lock to refueling electronic deposit (purse), the DEBIT FOR REFUEL command used for local refueling consumption and unlocking grey simultaneously, the INITIALIZE FOR UNLOCK command used for on-line unlocking and consumption transaction initialization, the DEBIT FOR UNLOCK command used for on-line unlocking grey transaction and supplementary debiting refueling consumption simultaneously, the GET GREY STATUS command used for reading grey lock state and launching local unlocking grey transaction.
